# EUROPEAN PATENT APPLICATION

(11) **EP 1 231 451 A1**
(43) Date of publication of application: **14.08.2002**
(21) Application number: 02001995.6
(22) Date of filing: 05.02.2002
(51) Int. Cl.: G01B 5/255, G01B 11/275

(54) **Gripping device to a pneumatic-tyred wheel for measuring and recording vehicle convergence**

(30) Priority: 08.02.2001 IT MO010002
(71) Applicant: Ferrari, Gino, 42015 Correggio (Reggio Emilia) (IT); Maioli, Franco, 42015 Correggio (Reggio Emilia) (IT)
(72) Inventor: Ferrari, Gino, 42015 Correggio (Reggio Emilia) (IT); Maioli, Franco, 42015 Correggio (Reggio Emilia) (IT)
(74) Representative: Reniero, Cirillo Silvano

(57) **Abstract**

A device for gripping a wheel rim and supporting instruments for measuring and recording vehicle wheel convergence, which device includes a star-shaped frame (2) with a least three angularly spaced extensions (2a), a wheel rim rest and centring roller (3) which can be adjustably located at the end of a respective extension (2a), a pair of diametrically extending arms (7) arranged to hook onto a tyre mounted on the said wheel rim, and a pair of articulated manoeuvring handles (4), characterised in that it comprises resilient pull back means (8) arranged between each of the said extensions (2a) and said handles (4), whereby pulling said arms (7) back towards the frame (2).

## Description

The present invention relates to improvements in, and relating to, a gripping device suitable for bracing onto wheels and supporting vehicle convergence measurement and recording instruments.

Gripping devices have been known for some time that are suitable for engaging with the outer edges of wheel rims and brace onto the tyre mounted thereon to permit the attachment and use of optical instruments used to check and, if necessary, correct the convergence angles required by vehicle wheels for the correct use of a vehicle. Such gripping devices are known in the trade as braces or jaws and essentially consist of a frame having three or four radial integral arms to whose ends are attached rest rollers that abut into the outer edge of the wheel rims.

The known gripping devices are tightened to the frame by a pair of articulated handles and by locating there between spacer brackets that can be moved in a plane perpendicular to the wheel rim, thereby allowing the operator to push the frame so that it rests perfectly against the wheel rim, i.e. the wheel hub that supports the wheel rim, while at the same time accompanying a pair of arms, pivoted, in their turn, to the two aforementioned handles, and hooked back at their free ends. The movement of accompaniment allows the arms to be opened out, while turning in a lever arm-like fashion as defined by the fastening brackets or jaws of the handles until the bent back ends are located around the tyre and wedge themselves into the tyre grooving.

When this operation has been carried out the operator releases the handles that are pulled back by return springs so that their centripetal force and the opposing force of the arms keep the jaw or brace locked onto the wheel.

The jaw has, on the opposite side to that against which the wheel rim is to rest, a projecting pin onto which an optical convergence checking instrument can be attached.

Such known devices have, however, a drawback that makes them quite awkward to manoeuvre and so make it difficult to obtain correct positioning on the wheel. The drawback consists of the fact that the arms are articulated to the aforementioned handles free to rotate at their own articulation thus forcing the operator, in order to carry out the manoeuvre of fastening the jaw to the wheel, to have to grasp the handles simultaneously while exerting a significant compressive force on these to overcome the force of the return springs, and the arms, to take them into their correct gripping position.

Since a significant force has to be applied to the handles to overcome that of the return springs, as the return springs have a necessarily strong resistance in order to be able to support the total weight of the jaw once it is clamped onto the wheel rim, contemporary movement needed to accompany the arms is necessarily a strain and, because of their freedom of movement, it is difficult to insert the hooked back ends of the arms into the deepest tyre grooves to ensure a good hold and thus proper checking of the convergence.

The main object of the present invention is to solve the above described problem associated with known gripping devices by providing a new device that is suitable for gripping a wheel rim and supporting the instruments that measure and record vehicle wheel convergence, so that convergence checking operations can be carried out more easily and quickly.

This and other objects that will be better appear below are achieved by an improved device for gripping a wheel rim and supporting instruments for measuring and recording vehicle wheel convergence, which device includes a star-shaped frame with a least three angularly spaced extensions, a wheel rim rest and centring roller which can be adjustably located at the end of a respective arm, pair of diametrically extending arms arranged to hook onto a tyre mounted on the said wheel rim, and a pair of articulated manoeuvring handles for said handles, characterised in that it comprises resilient return means arranged between each of the said arms and said handles whereby pulling said arms back towards the frame.

Further aspects and advantages of the present invention will better appear in the following description of some embodiments thereof given merely by way of nonlimiting examples, with reference to the accompanying drawings, in which:

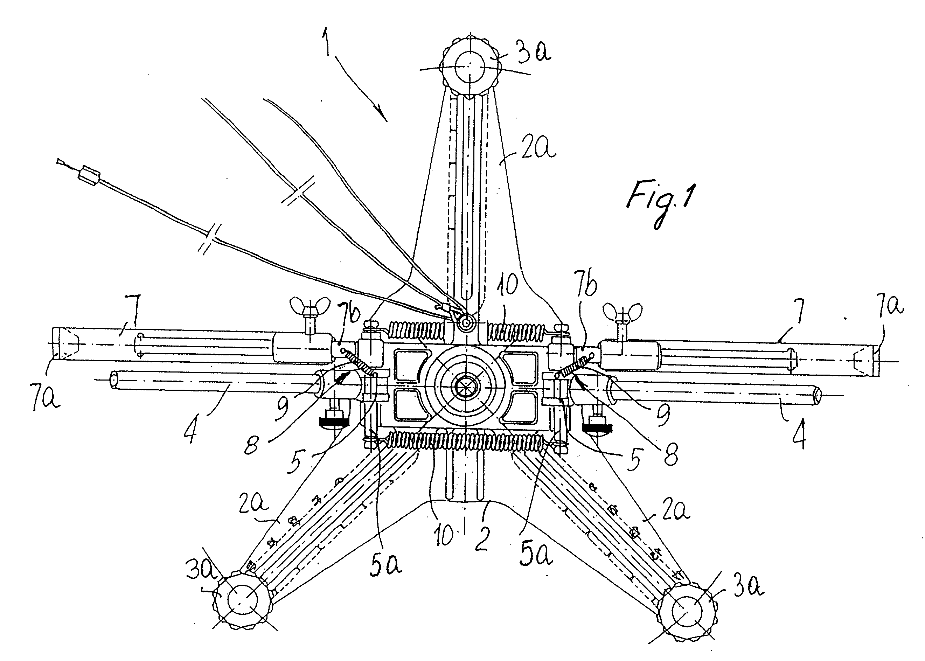

Figure 1 is a front view of a gripping device arranged to hook onto a wheel rim and support instruments used to measure and record vehicle convergence, in accordance with the present invention;

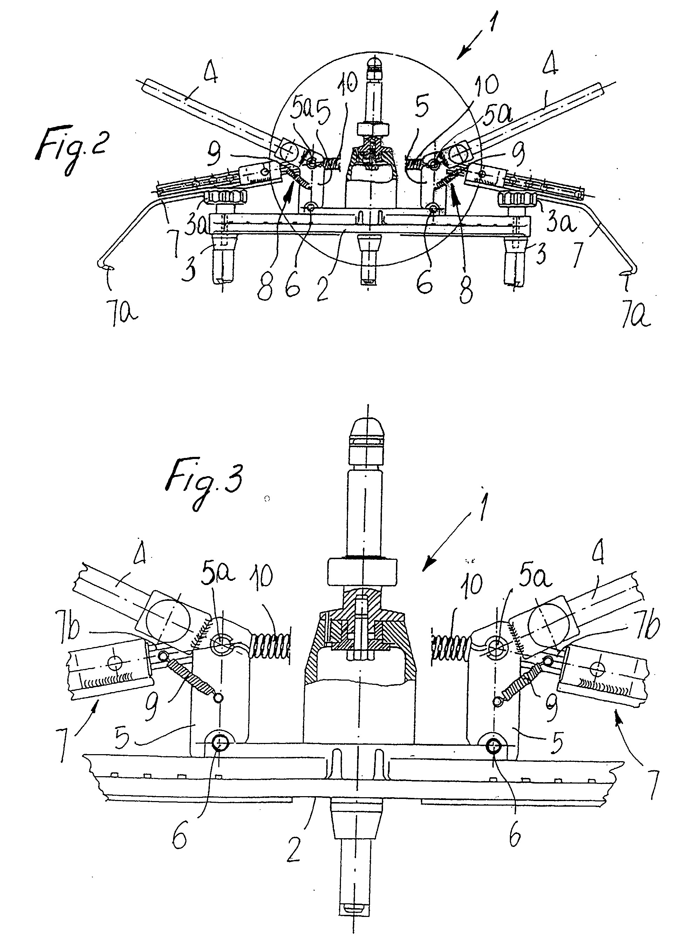

Figure 2 is a view from above and on a smaller scale of the gripping device shown in Figure 1; and
Figure 3 shows a detail on an enlarged scale of the central portion of the gripping device of Figure 2.

With reference to the above listed Figures, reference numeral 1 generally indicates a gripping device designed to hook onto a pneumatic-tyre wheel rim and support the instruments used to measure and record vehicle wheel convergence.

Gripping device 1 conventionally comprises a star-shaped frame 2 with three or more points 2a that support at their ends rollers 3, that can be adjusted in a radial position by means of a respective control knob 3a for attaching to and centring the gripping device 1 onto the outer face of a wheel rim (not shown in the drawings). The gripping device 1 also has a pair of handle bars 4 that are articulated at one end thereof to the frame 2 by means of a respective pair of spacer brackets 5 that angularly extend with respect to the handle bars 4 and are pivoted to a respective articulation pin 6 on the frame.

Handles 4 are also articulated to a respective pivot pin 5a which is located at an intermediate position of the spacer brackets 5 and to which a respective end of a pair of arms 7 is pivoted. Arms 7 are designed to hook the device 1 onto a tyre mounted on the wheel rim. To this end, the arms 7 have at their free ends outward pointing bent back portions 7a so that they can fit into a tyre groove.

Resilient means 8 is provided which is arranged between the arms 7 and their respective spacer brackets 5 to constantly pull arms 7 back towards the frame 2. The said resilient means 8 comprises, according to a preferred embodiment of the invention, a helical spring 9 having one end thereof secured to a respective arm 7 and its other end fastened to a respective arm end 7a close to the spacer brackets 5, so that spring 9 is loaded by traction, when handles 4 are pushed against a wheel rim engaged by rollers 3.

According to a second embodiment of the invention not illustrated in the drawings, the resilient means comprises torsion loading springs whose ends are attached to a respective arm 7 at a position close to its end 7b articulated to a handles 4, and respective brackets 5.

A pair of pull-back springs 10 are also provided between the pivot pins 5a as is known in the art.

The operation of the gripping device according to the invention is as follows.

The operator places the gripping device 1 against the outer side face of wheel rim to which convergence measuring and recording equipment is to be applied, while matching the 3 rollers to its outer edge.

The operator then grasps the handles 4 and pushes these against the wheel rim, thereby causing them to pivot about pins 6. By so doing the arms 7 are both resiliently urged by the springs 9 towards the frame 2 and thus towards the wheel tyre.

More precisely, the pushing action exerted on handles 4, besides causing these to pivot about the pins 6 together with the spacer brackets 5 that are in their turn articulated to the arms 7, cause these to move apart until the ends 7a reach and embrace the tyre settle into a groove formed in the latter. The operator then releases handles 4 and the device 1 is thus stiffly gripped onto the wheel rim.

The whole manoeuvre is finally assisted by the fact that the arms 7 are no longer free to flap around but are automatically held towards their working position by the springs 9, even though it is possible to effect resiliently controlled pivoting movement. This avoids the inconvenience and effort of simultaneously grasping the handles 4 and the arms 7 to move both in the same direction.

The above described invention is susceptible to numerous modifications and variations within its protective scope as defined by the tenor of the inventions.

## Claims

1. A device for gripping a wheel rim and supporting instruments for measuring and recording vehicle wheel convergence, which device includes a star-shaped frame (2) with a least three angularly spaced extensions (2a), a wheel rim rest and centring roller (3) which can be adjustably located at the end of a respective extension (2a), a pair of articulated manoeuvring handles (4) each pivoted to one face of the said frame (2), and a pair of diametrically extending arms (7) having one end thereof articulated to a respective manoeuvring handle (4) and arranged to hook onto a tyre mounted on the said wheel rim, **characterised in that** it comprises resilient pull back means (8) arranged between each of the said extensions (2a) and said handles (4), whereby pulling said arms (7) back towards the frame (2).

2. A device according to claim 1, **characterised in that** said resilient pull back means (8) comprises at least one helical spring (9) having one end bound to a handle (4) and its other end secured to an extending arm (7).

3. A device according to claim 1, **characterized in that** said pull-back means (8) comprise at least one torsion loading spring having one end bound to a handle (4) and its other end secured to an extending arm (7).

4. A device according to claim 2 or 3, **characterized in that** each manoeuvring handle (4) has a handle portion and at least one bracket portion (5) angularly extending with respect to its handle portion, each bracket portion having one end thereof articulated to the said frame (2) and its other end being rigid with its respective handle portion and carrying a pivot pin (5a) to which a respective manoeuvring arm (7) is articulated.

5. A device according to claim 4, **characterized in that** each helical or torsion spring means (8) has one end thereof bound to a bracket portion (5) of its respective handle (4) and its other end is secured to its respective arm (7) close to the said articulated end thereof.
